# EUROPÄISCHE PATENTSCHRIFT

(11) **EP 0 482 449 B1**
(45) Veröffentlichungstag und Bekanntmachung des Hinweises auf die Patenterteilung: **10.05.1995**
(21) Anmeldenummer: 91117355.7
(22) Anmeldetag: 11.10.1991
(51) Int. Cl.: C04B 14/30, C04B 18/02, C09C 1/24

(54) **Verfahren zum Einfärben von Baustoffen**
Process for colouring building materials
Procédé pour la coloration de matériaux de construction

(30) Priorität: 24.10.1990 DE 4033825
(43) Veröffentlichungstag der Anmeldung: 29.04.1992
(73) Patentinhaber: BAYER AG, 51368 Leverkusen (DE)
(72) Erfinder: Buxbaum, Gunter, Dr., W-4150 Krefeld 1 (DE); Kröckert, Bernd, Dr., W-4230 Wesel (DE)

(56) Entgegenhaltungen:
- EP-A- 0 396 975
- PATENT ABSTRACTS OF JAPAN, vol. 10, no. 377 (C-392) 16.Dezember 1986
- WORLD PATENTS INDEX LATEST, Week 8533, Derwent Publications Ltd., London, GB; AN 85-200807
- WPIL Derwent AN:86-240934/37

## Beschreibung

Die vorliegende Erfindung betrifft ein Verfahren zum Einfärben von Baustoffen mit anorganischen Pigmenten in Form von Granulaten.

Zement- und kalkgebundene Baustoffe wie Putze, Kalksandsteine, Faserzementteile oder Betonwerksteine, insbesondere Dach- und Pflastersteine sowie Gehwegplatten, werden in der Regel, wenn sie farbig gestaltet werden sollen, mit anorganischen Pigmenten eingefärbt. So ist es allgemein in der Baustoffindustrie üblich, Eisenoxide oder Eisenoxidhydroxide als Rot-, Schwarz-, Braun- oder Gelbpigmente, Manganoxide als Braunschwarzpigmente, Chromoxide als Grünpigmente und Titandioxide als Weißpigmente einzusetzen. Als weitere Beispiele können Ruße als Schwarzpigmente, Nickel- oder Chromrutile als Gelbpigmente und kobalthaltige Spinelle als Blau- und Grünpigmente, kupferhaltige Spinelle als Schwarzpigmente sowie die Mischkristalle aus Bariumsulfat und Bariummanganat als Blaupigmente genannt werden.

Zur Einfärbung von Betonwaren werden normalerweise die Pigmente im pulverförmigen Zustand eingesetzt. Sie haben in gemahlener Form den Vorteil der guten Dispergierbarkeit. Die vollständig homogene Verteilung solcher Pigmentpulver erfolgt in Betonmischungen in einer kurzen Zeit - bis zu wenigen Minuten. Der Nachteil dieser feinen Pulver besteht darin, daß sie kein gutes Fließverhalten aufweisen und sich beim Lagern häufig zusammenballen und verklumpen. Die genaue Dosierung wird hierdurch erschwert. Ein weiterer Nachteil einiger Pulver besteht darin, daß sie zum Stauben neigen.

Es ist bekannt, daß diese Nachteile bei der Pigmentierung von Betonteilen vermieden werden können, indem man anstelle trockener Pigmentpulver wässerige Pigmentsuspensionen einsetzt. Die Verwendung derartiger 30 bis 70 Gew.-% Pigment enthaltenden Pasten oder Slurries hat sich nur zögernd durchsetzen können. Denn durch den zusätzlichen Wassergehalt können je nach Entfernung von Herstell- und Einsatzort erheblich höhere Transportkosten auftreten. Auch kann die mitgelieferte große Wassermenge nicht in jeder Betonzubereitung verarbeitet werden.

Die Baustoffindustrie ist deshalb größtenteils bei dem Einsatz trockener Pigmentpulver geblieben. Der Verwendung von Pigmenten in Form von Mikrogranulaten, wie es aus der Kunststoff- und Lackindustrie bekannt ist, stand bisher die Meinung entgegen, Granulate seien in Betonzubereitungen weniger gut dispergierbar. Schwer dispergierbare Pigmentagglomerate erfordern wesentlich längere Mischzeiten. Bei den normalen, in der Baustoffindustrie üblichen kurzen Mischzeiten treten infolge schlechter Pigmentverteilung an der Betonoberfläche Stippen, Streifen oder Farbnester auf. Die im Pigment enthaltene Farbstärke kann sich nicht entfalten, so daß bei gleicher Farbintensität des Betonwerkstückes größere Pigmentmengen aufgewendet werden müssen.

Aus JP-A 85-200807 und JP-A 61-168535 ist die Herstellung von kornförmigen Eisenoxidpigmenten mit Teilchengrößen von 0,1 bis 0,3 »m bekannt.

Aus der nachveröffentlichten EP-A 396 975 sind Pigmentgranulate bekannt, die aus einem oder mehreren Pigmenten sowie aus Verbindungen des Bors, Aluminiums, Siliciums, Titans, Zinks und/oder Zinns bestehen.

In der DE-C 3619363 werden für die Einfärbung von Betonwaren Pigmentgranulate beschrieben, die im wesentlichen aus Pigment und einem oder mehreren die Dispergierung des Pigmentes im Beton fördernden Bindemittel(n) bestehen. Als Bindemittel, die in Beton als Dispergierhilfsmittel arbeiten, werden genannt; Alkylbenzolsulfonat, Alkylnaphthalinsulfonat, Ligninsulfonat, sulfatierte Polyglykolether, Melaminformaldehydkondensate, Naphthalinformaldehydkondensate, Glukonsäure, Salze von niedrigmolekularen teilveresterten Styrol-Maleinsäureanhydrid-Copolvmerisaten und Copolymere aus Vinylacetat und Krotonsäure. Der Anteil im Pigment soll bevorzugt 2 bis 6 Gew.-% betragen.

Die genannten Dispergierhilfsmitel wirken in Betonmischungen als Verflüssiger. Sie beeinflussen das Wasser-Zement-Verhältnis und wirken sich auf die Betonkonsistenz aus.

Im anorganischen Pigment selbst stellen die zugesetzten Bindemittel als organische Substanzen Fremdkörper dar.

Gemäß der DE-A 2940156 weist das anorganische Ausgangspigment einen Harzgehalt von mindestns 20 % auf. Eine Zerteilung entsprechender Granulate im Beton wird durch die Harzanteile hydrophob eingestellter Agglomerate sehr erschwert.

Die Aufgabe der Vorliegenden Erfindung besteht nun darin, zum Einfärben von Baustoffen gut fließende, nicht staubende anorganische Pigmentmikrogranulate zur Verfügung zu stellen, die die beschriebenen Nachteile des Standes der Technik nicht aufweisen.

Verfahren zum Einfärben von Baustoffen mit anorganischen Pigmenten mit Ausnahme von Titandioxid- und Zinkoxid-Weißpigmenten in Form von Granulaten mit einer mittleren Teilchengröße von 50 bis 500 »m, dadurch gekennzeichnet, daß die Pigmentgranulate aus einer Suspension aus einem oder mehreren Pigmenten und aus einer hydrolysierten oder schwerlöslichen Verbindung einer oder mehrerer lonensorten hergestellt werden, die per se als wesentlicher Bestandteil in einem oder mehreren Pigmenten zugegen sind.

Überraschenderweise stellte sich heraus, daß die durch z.B. Hydrolyse entstheenden Oxide und/oder Hydroxide die Dispergierung der Pigmente in Beton nicht behindern, den Granalien aber ausreichend Stabilität verleihen, So daß das Stauben verhindert wird und die Granalien frei fließend sind.

Die Granalien können in Form von Perlgranulaten z.B. in Sprühtrocknern oder Wirbelbetttrocknern oder -granulatoren erzeugt werden, oder in Form von Aufbaugranulaten in Granuliertellern, Dragiertrommeln oder vergleichbaren dem Fachmann bekannten Aggregaten erzeugt werden.

Die zur Hydrolyse oder Niederschlagung notwendigen Verbindungen können in Form von löslichen Salzen zugesetzt werden oder in einer besonderen Ausführungsform durch teilweises Lösen der Pigmente in situ erzeugt werden. Bevorzugt enthalten die erfindungsgemäßen Pigmente mehrwertige Kationen der Übergangselemente.

Bevorzugt sind Pigmente, die mehrwertige Kationen der Übergangsmetalle enthalten. Besonders bevorzugt sind Pigmente, die Eisenoxid, Chromoxid und/oder Manganoxid enthalten.

Die Hydrolyse oder Niederschlagung kann thermisch oder durch Zusatz alkalisch reagierender Reagenzien bzw. schwer lösliche Verbindungen bildender Reagenzien gesteuert werden.

Die Menge der erfindungsgemäß zugesetzten Verbindungen kann, auf Pigment bezogen, 0,05 bis 5,0 Gew.-%, vorzugsweise 0,1 bis 1 Gew.-%, als Oxid gerechnet, betragen. Kleinere Mengen zeigen eine geringe Wirksamkeit, größere Mengen können zu Dispergierschwierigkeiten führen.

Es hat sich gezeigt, daß die erfindungsgemäßen Granulate eine vom Pigment abhängige Partikelgröße nicht überschreiten sollten. Diese ist in erster Linie abhängig vom Schüttgewicht des Granulates, das wiederum ein Maß für die Porosität der Partikel darstellt. Die Porosität wiederum ist im Falle der Sprühgranulation abhängig vom Feststoffgehalt der pumpfähigen Ausgangssuspension vor dem Trocknen, die in Abhängigkeit von Teilchengröße und Teilchenform des Pigments stark schwanken kann. Als Maß für das Schüttgewicht dient das in der DIN 53 194 vom August 1957 definierte Stampfvolumen bzw. Stampfgewicht. Die erfindungsgemäßen Pigmentgranulate zeichnen sich dadurch aus, daß sie bei der Bestimmung des Stampfgewichtes nicht zerfallen. Bevorzugt weisen die erfindungsgemäßen Granulate ein Stampfgewicht zwischen 0,5 und 2,5 g/cm³ , besonders bevorzugt 0,8 bis 1,5 g/cm³ , auf.

Auch sollte die Partikelgröße nicht zu niedrig gewählt werden, da die feinen Anteile unter etwa 50 »m - abhängig von den Pigmenteigenschaften - für das Stauben eines trockenen Pulvers verantwortlich sind. Zudem wird mit Zunahme dieses Anteils die Riesel- oder Fließfähigkeit verschlechtert.

Die nach der Erfindung beanspruchten Granulate liegen in ihrer durchschnittlichen Partikelgröße zwischen 50 und 500 »m, vorzugsweise zwischen 100 und 300 »m.

Die Pigmentgranulate dieser Partikelgröße stellen handhabungsstabile, nicht staubende, gut rieselfähige Pulver dar, die für die Einfärbung von Baustoffen gut geeignet sind. Im Gegensatz zur bisherigen Meinung (DE-C 36 19363) reichen die Scherkräfte in Betonzubereitungen auf die Granulate für die vollständige Pigmentdispergierung während des Mischzyklus aus.

Besonders gute Ergebnisse werden mit Eisenoxid-Pigmenten erzielt.

Das Stampfgewicht der Granulate kann je nach Pigment, Zusatzart und -menge und Wassergehalt der Suspension schwanken. Niedrige Stampfgewichte führen zu wenig stabilen Granulaten, hohe Stampfgewichte zu schlechter Dispergierbarkeit. Die erfindungsgemäßen Eisenoxidschwarzgranulate weisen bevorzugt Stampfgewichte zwischen 0,8 und 1,4 g/cm³ , Eisenoxidrotpigmentgranulate zwischen 1,2 und 1,6 g/cm³ , auf.

Die erfindungsgemäßen Granulate enthalten normalerweise um 1 Gew.-% Wasser. Je nach Pigmentfeinheit und Teilchenform kann der Wassergehalt höher liegen, ohne daß die Rieselfähigkeit negativ beeinflußt wird.

Das Verfahren der Erfindung soll an folgenden Beispielen näher erläutert werden; es ist darin jedoch keine Einschränkung auf die Beispiele zu sehen.

Im Falle der aufgeführten Beispiele wurde die Bestimmung der Fließfähigkeit mit dem DIN-Becher 4 (DIN 53211 vom April 1974) als Auslaufzeit analog auf die zu prüfenden Granulate angewandt.

Die Prüfung der Dispergierbarkeit in Beton erfolgte über die Farbstärkemessung an mit Weißzement hergestellten Prismen bei folgenden Daten: Zement-Quarzsand-Verhältnis 1 : 4, Wasser-Zement-Wert 0,35, Pigmentierungshöhe 1,2 %, bezogen auf Zement, verwendeter Mischer von RK Toni Technik, Berlin, mit 5 l Mischschüssel, Bauform 1551, Drehzahl 140 U/min (Ansatz: 500 g Zement). Nach je 30, 40, 50, 60, 70 und 80 s wurden 4 Mischungsproben (300 g) entnommen und Probekörper (5 x 10 x 2,5 cm) unter Druck (32,5 N/mm² ) hergestellt. Härtung der Probekörper: 24 Std. bei 30° C und 95 % rel. Luftfeuchte mit anschließendem Trocknen 24 Stunden bei 50° C. Farbdatenmessung über Hunterlab-Gerät: 3 Meßpunkte je Ober- und Unterseite, pro Pigmentmischung 24 Meßpunkte. Die erhaltenen Mittelwerte werden in bezug zu der Probe mit 80 s Mischzeit (Endfarbstärke ≠ 100 %) gesetzt.

### Beispiel 1

Eine wäßrige Suspension mit ca. 50 Gew.-% Fe₃O₄ (Bayferrox 330 - Handelsprodukt der Bayer AG) wird bei 30° C mit verdünntem H₂SO₄ auf pH 2 gestellt und ca. 2 h gerührt. Anschließend wird mit 20 %iger Natronlauge der pH-Wert zur Hydrolyse der gelösten Eisenionen schnell auf 8-9 hochgestellt. Die resultierende Suspension gelangte mit Druck von 4 bar auf die im Trockner installierte Hohlkegeldüse (Sprühwinkel 30° , Bohrung 1,1 mm). Vom Erdgas-Flächenbrenner traten die Verbrennungsgase mit einer Temperatur von 480° C in den Sprühtrockner. Die Austrittstemperatur der Gase lag bei 140° C.

Es wurden stündlich 20 kg Eisenoxidschwarzpigment in mechanisch stabiler Granulatform mit einer durchschnittlichen Partikelgröße von 150 »m und einer Restfeuchte von etwa 2 Gew.-% erhalten. Das Stampfgewicht der Granulate betrug 0,93 g/cm³ . Das Fließverhalten war sehr zufriedenstellend. Die Prüfung auf Dispergierbarkeit an Betonprismen durch Messung der Farbstärkeentwicklung ergab eine Entfarbstärke bei 70 Sekunden Mischzeit.

### Beispiel 2

Die Eisenoxidsuspension wie in Beispiel 1 wird mit 0,5 Gew.-% FeCl₃, berechnet auf das trockene Pigment, in Form einer wäßrigen Lösung zugesetzt. Anschließend wird mit diäquivalenter Menge Ammoniumbicarbonatlösung zugesetzt und unter denselben Bedingungen wie in Beispiel 1 gesprühtrocknet. Es entstand ein frei-fließendes nicht staubendes Granulat, das sich hervorragend in Beton einarbeiten ließ.

### Beispiel 3

Eine 55 %ige Anschlämmung eines Cr₂O₃-Pigmentes (Chromoxidgrün GN-M, Handelsprodukt der Bayer AG) wurde auf einem Eirich-Granulierteller unter Zusatz von 0,7 Gew.-% basischen Cr-Sulfats in Form einer verdünnten wäßrigen Lösung granuliert.

Die Granalien wurden bei 200° C nachgetrocknet. Danach war kein Chrom im wäßrigen Auszug festzustellen. Die Granalien waren gut rieselfähig und nicht staubend sowie in Beton gut dispergiert.

## Patentansprüche

1. Verfahren zum Einfärben von Baustoffen mit anorganischen Pigmenten mit Ausnahme von Titandioxid- und Zinkoxid-Weißpigmenten in Form von Granulaten mit einer mittleren Teilchengröße von 50 bis 500 »m, dadurch gekennzeichnet, daß die Pigmentgranulate aus einer Suspension aus einem oder mehreren Pigmenten und aus einer hydrolysierten oder schwerlöslichen Verbindung einer oder mehrerer lonensorten hergestellt werden, die per se als wesentlicher Bestandteil in einem oder mehreren Pigmenten zugegen sind.

2. Verfahren gemäß Anspruch 1, dadurch gekennzeichnet, daß Pigmente aus der Gruppe Eisenoxid, Chromoxid und/oder Manganoxid eingesetzt werden.

3. Verfahren gemäß einem oder mehreren der Ansprüche 1 oder 2 dadurch gekennzeichnet, daß die anorganischen Pigmente Eisenoxidpigmente sind.

4. Verfahren gemäß einem oder mehreren der Ansprüche 1 bis 3, dadurch gekennzeichnet, daß die in den Granulaten enthaltenen Verbindungen, auf Pigment bezogen, 0,05 bis 5 Gew.-%, vorzugsweise 0,1 bis 1 Gew.-%, gerechnet als Oxide, betragen.

## Claims

1. A process for colouring building materials with inorganic pigments - except titanium dioxide and zinc oxide white pigments - in the form of granules with an average particle size of 50 to 500 »m, characterized in that the pigment granules are produced from a suspension of one or more pigments and a hydrolyzed or poorly soluble compound of one or more ion types which are present per se as an essential constituent in one or more pigments.

2. A process as claimed 1, characterized in that pigments from the group consisting of iron oxide, chromium oxide and/or manganese oxide are used.

3. A process as claimed in one or more of claims 1 or 2, characterized in that the inorganic pigments are iron oxide pigments.

4. A process as claimed in one or more of claims 1 to 3, characterized in that the compounds present in the granules make up 0.05 to 5% by weight and preferably 0.1 to 1% by weight (expressed as oxides), based on pigment.

## Revendications

1. Procédé pour colorer des matériaux de construction dans la masse par des pigments minéraux, à l'exception des pigments blancs de bioxyde de titane et d'oxyde de zinc, à l'état de granulés à une dimension de particule moyenne de 50 à 500 »m, caractérisé en ce que les granulés de pigment sont préparés à partir d'une suspension d'un ou plusieurs pigments et d'un composé hydrolysé ou peu soluble d'un ou plusieurs types d'ions qui sont présents en soi en tant que constituants essentiels dans un ou plusieurs pigments.

2. Procédé selon la revendication 1, caractérisé en ce que l'on utilise des pigments du coupe de l'oxyde de fer, de l'oxyde de chrome et/ou de l'oxyde de manganèse.

3. Procédé selon une ou plusieurs des revendications 1 ou 2, caractérisé en ce que les pigments minéraux sont des oxydes de fer pigmentaires.

4. Procédé selon une ou plusieurs des revendications 1 à 3, caractérisé en ce que les composés contenus dans les granulés représentent, par rapport au pigment, de 0,05 à 5 % en poids, de préférence de 0,1 à 1 % en poids, exprimé en oxydes.
